# EUROPEAN PATENT SPECIFICATION

(11) **EP 2 157 211 B1**
(45) Date of publication and mention of the grant of the patent: **02.09.2015**
(21) Application number: 08425536.3
(22) Date of filing: 01.08.2008
(51) Int. Cl.: C25C 5/02, A61K 9/16

(54) **Bioactive metal nanomaterials stabilized by bioactive agents and preparation process**
Bioaktive metallische Nanopartikel stablisiert durch bioaktive Agentien und Prozess zu ihrer Herstellung
Nanoparticules en metal bioactif stabilisées par des agents bioactifs et procédé de preparation

(43) Date of publication of application: 24.02.2010
(73) Proprietor: Universita' Degli Studi di Bari, 70121 Bari (IT)
(72) Inventor: Cioffi, Nicola, 70126 Bari (IT); Ditaranto, Nicoletta, 70126 Bari (IT); Sabbatini, Luigia, 70126 Bari (IT); Tantillo, Giuseppina, 70010 Valenzano (Bari) (IT); Torsi, Luisa, 70126 Bari (IT); Zambonin, Pier Giorgio, 70126 Bari (IT)
(74) Representative: Gislon, Gabriele

(56) References cited:
- WO-A-2007/122651
- US-A- 5 620 584
- US-A1- 2007 284 261
- US-B1- 6 706 795
- G.K. VERTELOV ET AL: "A versatile synthesis of highly bactericidal Myramistin stabilized silver nanoparticles" NANOTECHNOLOGY IOP, vol. 19, no. 35, 18 July 2008 (2008-07-18), page 355707, XP002509590 Bristol, GB

## Description

The present invention concerns biocide nanomaterials and a process for the preparation thereof. More specifically, the present invention concerns nanoparticles (NP) of the core and shell type, i.e. having a core and at least one shell which encloses said core, in which the core is a metal having biocide action and the shell is made of a compound of quaternary ammonium, preferably a surfactant agent, with biocide activity.

Core/shell nanoparticles with surfactant agent shell are known in the literature.

US-A-5620584 refers to nanoparticles of core/shell type wherein the core is a metal selected from Ag, Cu, Pd, Pt, etc., when the shell is a symmetrical tetraalkylammonium salt with R1=R2=R3=R4= n-butyl and n-octyl (see column 2, lines 59 to column 3, lines 8, which passage refers to nanoparticles having a shell formed from symmetrical tetraalkylammonium salts). In a variant of the invention the substituents are R1=R2=R3 and R4 is different. An electrochemical process is used for the preparation of these nanoparticles having a metal core and a shell of tetraalkylammonium salts serving as stabilisers for the rather small metal nuclei in the cluster stage. The obtained soluble metal clusters are embedded in polymers to prepare materials for electronic, optical and magnetic applications (see column 6, lines 7-9).

US 2007/0284261 discloses the preparation of silver triangular pyramid particles by means of depositing said particles onto a growth substrate. An electrolytic solution containing silver ions and at least one surfactant and a solvent is filled within a reaction vessel containing an electrolytic solution layer. The silver ions dissolved in the electrolytic solution are reduced by applying a voltage to said electrolytic solution layer and silver triangular pyramid particles are deposited onto a substrate. The surfactant has an alkyl main chain in the molecule, which comprises 1 to 20 carbon atoms (more preferably 4 to 16 carbon atoms). The resulting product is stuck to the substrate, as a result of an electrodeposition.

WO 2007/122651 relates to nanoparticles that are a three-layers particle with externally a layer of biocide metals, i.e. the metals that are the core of the claimed nanoparticles. The core diameter is 6 to 15 nm (page 19 1 st paragraph, and the final particle includes a layer of bifunctional ligand and a layer of metal Benzalkonium chloride is optionally adsorbed on the external surface of the three-layer particles (page 25, lines 5-8).

"A versatile synthesis of highly bactericidal Myramistin stabilized silver nanoparticles" by G.K.Vertelov et al. in Nanotechnology 19 355707, discloses a nanoparticle obtained by chemical precipitation of a metal core and an ammonium compound (Myrastimin) that contains an amidic group in the alkyl chain.

The use of nanoparticles obtained electrochemically as in the patent cited above and having a core of Cu or Ag for use as biocides is known in the literature, for example from the following publications:
*1*. N. Cioffi, et al., Chemistry of Materials, 17, 2005, 5255-5262
*2.* N. Cioffi, et al., Analytical and Bioanalytical Chemistry, 382, 2005, 1912-1918.
3. N. Cioffi, et al., Applied Physics Letters, 85 (12), 2004, 2417-2419*.*
*4*. N. Cioffi, et al., Journal of Applied Biomaterials and Biomechanics, 2, 2004, 200*.*

These publications describe the biocide activity, i.e. bioactivity, of nanoparticles with a core of Cu or Ag and a shell obtained with a surfactant agent selected from tetraoctyl-ammonium chloride and tetrabutylammonium perchlorate. The structure of the nanoparticles is similar to the structure produced in the case of inverse micelles, with the polar heads of the surfactant agent molecules arranged near the metal core and at least one lipophilic tail facing outwards. According to said publications, the nanoparticles are used to form nanocomposite materials and for said purpose are incorporated in polymeric matrixes which, once in contact with aqueous solutions, release ionic species, in quantities and according to kinetic processes correlated with the quantity of nanoparticles present in the material and the type of polymer used for the matrixes. In particular, said publications describe how the concentration of metal released in solution increases according to the contact time and reaches a plateau value, the entity of which increases as the concentration of nanoparticles in the nanocomposite coating increases. More specifically, a linear type relation is observed between the percentage of metal incorporated in the coating and the mean release values measured once the plateau has been reached.

Said publications furthermore describe the pattern of the release of metallic ions from nanocomposite materials in experiments in which the solution, together with the ions released in it, is completely removed and substituted by a new solution every 24 hours. The experiments lasted a total of 10 days and were performed using composite nanomaterials containing nanoparticles dispersed in three different polymeric matrixes, i.e. polyvinyl methyl ketone, polyvinyl chloride and polyvinylidene fluoride. In all cases a reduction in the quantity of metallic ions released in the first three/four days was recorded, with subsequent stabilisation at a plateau value. Said value nevertheless represents a concentration of ions in solution sufficient to guarantee the bioactivity of the nanocomposite materials.

The nanoparticles of copper and silver, and likewise tin and zinc, and the nanomaterials that comprise them can be profitably used to inhibit the growth of various microorganisms. In general terms, all organisms whose life cycle is influenced by these metals constitute potential targets for the NPs described here. These materials have multiple uses: for example containers or surfaces for exposure to food, biomedical devices and medical-surgical equipment such as toothbrushes, gauze, sterile equipment, antibacterial garments (underwear, sportswear and professional clothing) both of the disposable type (overalls, sheets, etc.), and for repeated use (coated fabrics, composites, synthetics); paints and coatings with anti-mould and/or anti-bacterial properties.

In general, any sector with an interest in limiting biological risk, including allied areas involving large numbers of users or the presence of foodstuffs, humidity or other pathogen development factors (airports, stations, hospitals, farms, the canning and food industries, etc.) can benefit from the development of high effectiveness technologies.

A problem encountered in the known biocide compositions based on nanoparticles of Cu and Ag is the loss of activity in the long term. Furthermore, undesired microorganisms can develop resistance to the action of Cu and Ag, following the prolonged use of said metals in biocide remedies.

In an attempt to address this problem, the quantities of metallic species released have been increased. In particular, on the basis of what has been published so far in literature, the only way of increasing the quantity of bioactive species released is to increase the concentration of Cu NPs used in the formulation.

The use of different polymeric matrixes in which to disperse the nanoparticles does not effectively solve the above problems; furthermore, the type of matrix is not always suitable for the use required: for example, a PVC matrix is not normally suitable for use with food. Currently, thin metal layers (but not nanoparticles) are used in devices such as toothbrush heads, plating of biomedical equipment, etc., which involve a greater use of metal than required if nanoparticles are used with the same surface area. Furthermore, thin layers are difficult to use in many fields such as fabrics, paints, etc.

It is therefore necessary to improve the biocide activity of nanoparticles with metal ions such as Cu and Ag.

The aim of the present invention is to solve said problem in a simple, dependable, effective and inexpensive way, thus permitting the use of nanoparticles to inhibit bacterial contamination in sectors such as the bio-sanitary sector, textiles, packaging, space exploration, paints and coatings, etc. Said object is achieved by the present invention which refers to nanoparticles as claimed in claim 1.

The invention furthermore provides a composition of nanoparticles as claimed in claim 4.

A further object of the invention are the nanocomposite materials which incorporate the nanoparticles as in claim 1.

The nanoparticles of the invention are of the core/shell type; the core consists of metals such as Cu, Ag, Sn, Zn etc.; the mean dimensions of the cores are in the order of a few nanometres, typically 4-10 nm; the pristine oxidation state is zero. Conservation in the air causes the core to convert into the corresponding oxide without altering the properties of interest for the application.

According to the present invention, the shell of the nanoparticle consists of at least one layer of cationic compounds in the form of quaternary ammonium salts having biocide activity, with alkyl chains R defined as specified below. According to the invention, the quaternary ammonium salts have an asymmetrical structure, i.e. at least one of the four substituents is different from the others; the invention compounds are selected from those that come under the general definition of Benzalkonium chloride, and from dimethyl-didodecyl-ammonium chloride, dimethyl-didecyl-ammonium chloride, benzyl-dodecyl-bis(2-hydroxyethyl) ammonium chloride.

As is known, benzalkonium chloride (BAC) is a mixture of quaternary ammonium salts and more specifically it is a mixture of alkylbenzyldimethylammonium chlorides, in which the R group is in the range from octyl (C₈H₁₇-) to octadecyl (C₁₈H₃₇-).

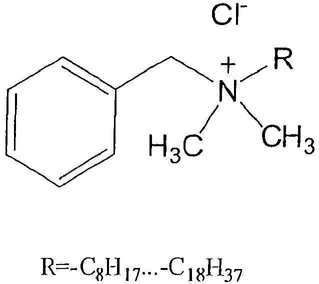

The invention derives from the surprising discovery that nanoparticles with the formula

(Me)ₘ(NR₁R₂R₃R₄⁺X⁻)ₙ (1)

where (Me) is the core formed by a metal selected from Ag, Cu, Sn and Zn, (NR₄⁺X⁻) is the shell formed by a compound with biocide activity in the form of tetraalkylammonium salt, in which X is selected from Cl, Br and I, and where NR₁R₂R₃R₄⁺ is a compound as above defined.
1. can be synthesised to give stable nanoparticle formulations;
2. show a biocide activity far superior to that of the metal core only, due to the synergism between core and shell.

With regard to point 1, it has been discovered that it is possible to electrochemically synthesise nanoparticles with asymmetric ammonium salts and that they are stable, contrary to expectations for these types of particles due to the asymmetry of the substituents R₁R₂R₃ and R₄.

In relation to point 2, the biocide activity of the nanoparticles according to the invention is so high as to justify the presence of a synergic action of the ions released by the metal core and the ammonium salt, having itself known bioactivity.

A further advantage is given by the fact that the nanoparticles of the invention can be used as is, i.e. without having to be inserted or incorporated in polymeric matrixes. This means that they can be used for example as an impregnating agent for fabrics or other porous/fibrous matrixes. These and further advantages will be evident from the following description of the invention and from the following illustrative non-limiting examples.

As mentioned above, one object of the invention is the synthesis of nanoparticles having general formula

(Me)ₘ(N R₁R₂R₃R₄⁺X⁻)ₙ (1)

where (Me) is the core formed by a metal selected from Ag, Cu, Sn and Zn; (N R₁R₂R₃R₄⁺X⁻) is the shell, where X is selected from Cl, Br and I; where NR₁R₂R₃R₄⁺ is a compound in which at least one R is different from the others and is an alkyl chain (if necessary functionalised or provided with branches or lateral aromatic groups) of varying length, preferably between 8 and 18 atoms of carbon, according to claim 8.

Preferably the metals are selected from Cu and Ag and the anions are selected from chloride and bromide. In particular nanoparticles of formula (1) are preferred in which Me is Cu and X is Cl.

More preferably nanoparticles are used in which the quaternary ammonium compound is BAC and in which the long alkyl chain of the BAC has a number of carbons between 8 and 18.

As can be seen from the formula, the four carbon substituents R₁-R₄ are at least partly different from one another, i.e. the surfactant agent is "asymmetrical". All the compounds of quaternary ammonium salt having biocide activity and at least one chain with the characteristics described above can be used in the synthesis of the nanoparticles of the invention. Rate and amount of the release can be modulated by varying the composition of the nanoparticle or the composition of composite coatings in which the nanoparticles can be mixed with a dispersing matrix in variable quantities.

Preferably, the compositions comprise nanoparticles which all have the same type of core, i.e. a core with the same metal, preferably Cu or Ag.

The nanoparticles are synthesised electrochemically.

According to a first embodiment of the invention, the synthesis is performed analogously to what is known in literature. A synthesis example is given below.

### Example 1 - synthesis of nanoparticles of copper with the sacrificial anode technique using organic solvents.

The synthesis is performed in a conventional cell with three electrodes: the working electrode consists of a copper plate and the counter electrode of a platinum plate, both having thickness of 0.5 mm and area of 2.5 cm², for an overall solution volume of 10 mL; the reference electrode is an Ag/AgNO₃ 0.1 M in acetonitrile produced in the laboratory. The electrosynthesis solution contains Benzalkonium chloride dissolved in a mixture of acetonitrile (ACN) and tetrahydrofuran (THF) in a proportion of 1:3.

The BAC is available commercially (CAS number 63449-41-2).

The synthesis of the NPs object of this invention is performed for a period of between 3 and 12 hours. Longer working times require replenishment of the electrolytic concentrations.

According to a further embodiment of the invention, it is possible to carry out the electrochemical synthesis from an aqueous solution and not, as known, from a solution of organic solvent.

A further object of the present invention is therefore a process for the preparation of nanoparticles comprising a metallic core and a shell of surfactant molecules, in which said particles are prepared electrochemically in a cell provided with three electrodes including a working electrode and a reference electrode, characterised in that it uses an aqueous solution of a surfactant agent and metal salt.

More specifically, it has surprisingly been found that it is possible to synthesise nanoparticles with shell made of quaternary ammonium compounds starting from aqueous solutions containing in solution a salt of the metal which will form the core (for example CuSO₄) and the quaternary ammonium compound which will form the shell (for example BAC). Typically, the solution has basic pH, preferably greater than or equal to 9. The ratio between the concentration of surfactant agent (e.g. BAC) and the metal salt in the working solution is in the range between 15:1 and 1:1 and it is preferably 10:1.

A potential is applied to the working electrode which, with respect to the reference electrode, can be varied in a range of between -0.5 and -2.0 V.

### Example 2 - synthesis of nanoparticles of copper with the sacrificial anode technique starting from an aqueous solution.

The synthesis is performed in a conventional cell with three electrodes: the working electrode consists of a platinum plate and the counter electrode of a copper plate, both having thickness of 0. 5 mm and area equal to 2.5 cm², for an overall solution volume of 5 mL; the reference electrode is an Ag/AgCl/KCl_{sat,aq}, produced in the laboratory. In typical experimental conditions, the aqueous electrosynthesis solution contains Benzalkonium chloride ([BAC]=0.5M), copper sulphate ([CuSO₄]=0.05M) and has a pH of at least 9.

The BAC is available commercially (CAS number 63449-41-2).

The synthesis of the NPs object of this invention is performed by applying to the working electrode a potential which can be varied in a range of -0. 5 to -2 V (with respect to the reference electrode) for a period of 3 to 12 hours. Longer working times require replenishment of the electrolytic concentrations.

### Example 3. Modification of materials.

The nanoparticles can be used to form nanocomposite materials. For said purpose they are incorporated in the polyvinyl methyl ketone polymeric matrix, by means of a simple process of mixing of the dispersion of nanoparticles and the polymer, the resulting dispersion can be deposited on various substrates (glass, metal, silicon, etc.) with different methods. The resulting nanocomposite materials, once exposed to aqueous solutions, release ionic species, in quantities and according to kinetic processes correlated with the quantity of nanoparticles present in the material. In particular, the concentration of metal released in solution increases according to the contact time and reaches a plateau value, the entity of which increases as the concentration of nanoparticles in the nanocomposite coating increases.

### Example 4. Modification of textile products.

The nanoparticles were used for the modification of textile products; in this case, for cotton fabrics or fabrics with mixed or synthetic composition, it was surprisingly found that the nanoparticles are easily absorbed and retained by the textile fibres, and that therefore the deposition can be performed also by simple immersion/impregnation.

In the present case, a sample of synthetic/cotton mixed fibre fabric was immersed in a solution of nanoparticles obtained as in example 1 and left in immersion for 15 minutes. The fabric was then dried and it was found that the nanoparticles had adsorbed onto the fibres, thus modifying their surface. By performing simple impregnation by immersion, it is possible to re-use the same treatment bath several times, without substantially varying the concentration of copper retained on the surface, or that released in solution.

### EXAMPLE 5 - Illustrative demonstration of synergic action between nanophase of copper and BAC.

In order to compare the biocide activity of the Cu-BAC nanoparticles with that of the individual materials constituting the nanostructure, polymer type coatings were produced (polyvinyl methyl ketone, PVMK)/active material containing (a) Cu-BAC nanoparticles, i.e. with copper core and BAC shell (b) BAC only, (c) copper only, in nanoparticle form (Cu-TBAP) but stabilised by a biologically inert surfactant agent, tetrabutylammonium perchlorate (TBAP), (d) CuCl₂ (used as a source of Cu^{II} ions immediately soluble in water).

The percentage in weight of the copper dispersed in all the coatings based on this metal (samples a, c, d) was 5%. The percentage in weight of BAC in the coatings that contain it (samples a, b) was 35%.

All the materials were deposited on the bottom of Petri dishes via spin-coating starting from a solution containing a bioactive material (different according to the type of sample) and PVMK, dissolved in a 1/3 mixture of acetonitrile/tetrahydrofuran. The Petri dishes thus modified were exposed to a very concentrated broth culture of a model organism, Escherichia Coli, following a procedure reported in the publications #1 and #2 of page 1, aimed at promoting development of the microorganism in distinct colonies. These are visible under the optical microscope and permit quantification of the inhibitory effect of the bioactive material vis-à-vis development of the microorganism. An inverse correlation is established between the effectiveness of the material and the number of colonies developed in the Petri dishes. It should be noted that, since the experiment is designed to highlight the synergic action of two bioactive species like the BAC and the nanostructured copper, an extremely concentrated broth culture of E. Coli was used, therefore able to generate - in the absence of a marked biological effect - a continuum (indicated as "uncountable") of colonies inside the dishes.

The results of the experiment, obtained as mean value on three replicates for each type of sample, are given in the following table. From the data in the table it can be seen that sample (a) shows greater inhibitory capacity vis-à-vis the development of colonies of E. Coli, confirming the synergic action for the Cu-BAC nanoparticles.

**Table 1.**

| *SAMPLE* | | ***Units forming colony* / *mL*** |
|---|---|---|
| *e* | *CONTROL (Petri dish without coating)* | UNCOUNTABLE |
| *d* | *PVMK* + *CUCl₂ 5% w*/*w* | UNCOUNTABLE |
| *c* | *PVMK* + *CuNPs (Cu core*/*TBAP shell) 5% w*/*w* | UNCOUNTABLE |
| *b* | *PVMK* + *BAC 35% w*/*w* | 230 |
| *a* | *PVMK* + *CuNPs (Cu core*/*BAC shell)5% w*/*w* | 0 |

## Claims

1. Nanoparticles *core*/*shell, having mean dimensions of the core in the range of 4 to 10* nm, ***characterized in** having* general formula
(Me)ₘ(N R₁R₂R₃R₄⁺X⁻)ₙ (1)
where (Me) is the core formed from a metal selected from Ag, Cu, Sn and Zn; (N R₁R₂R₃R₄⁺X⁻) is the shell formed of a plurality of molecules, where X is selected from Cl, Br and I; where NR₁R₂R₃R₄⁺ is *selected from benzalkonium chloride, dimethyl-didodecyl-ammonium chloride*, *dimethyl-didecyl-ammonium chloride, benzyl-dodecyl-bis(2-hydroxyethyl) ammonium chloride and mixtures thereof.*

2. Nanoparticles as claimed in claim 1, in which Me is Cu.

3. Nanocomposite materials comprising a matrix selected from a polymeric matrix and a fabric matrix and a composition of nanoparticles as claimed in claim 1 or 2.

4. Composition comprising two or more pluralities of nanoparticles as claimed in claim 1 or 2.

5. Composition as claimed in claim 4, wherein Me is the same for all the nanoparticles.

6. Use of the nanoparticles according to claim 1 or 2 or of the compositions according to claim 4 or 5, as biostatic compounds, or biocides and/or disinfectants.

7. Disinfecting composition **characterised in that** it contains nanoparticles as claimed in claim 1.

8. Process for the preparation of nanoparticles *core*/*shell having mean dimensions of the core in the range of 4 to 10 nm, having general formula*
*(Me)ₘ(N R₁R₂R₃R₄⁺X⁻)ₙ* *(1)*
*where (Me) is the core formed from a metal selected from Ag, Cu, Sn and Zn; (N R₁R₂R₃R₄⁺X⁻) is the shell formed of a plurality of molecules, where X is selected from Cl, Br and where NR₁R₂R₃R₄⁺ is a quaternary ammonium compound wherein at least one R is different from the others and is a linear alkyl chain with length between 8 and 18 atoms of carbon,* wherein said particles are prepared electrochemically in a cell provided with three electrodes including a working electrode and a reference electrode, **characterised in** using for said preparation an aqueous solution of surfactant agent and metal salt, *said aqueous solution having* a *pH* equal *to or higher* than *9.*

9. A process as claimed in claim 8, wherein (NR₁R₂R₃R₄⁺X⁻) is selected from benzalkonium chloride, dimethyl-didodecyl-ammonium chloride, dimethyl-didecyl-ammonium chloride, benzyl-dodecyl-bis(2-hydroxyethyl) ammonium chloride and mixtures thereof.

## Patentansprüche

1. Kern/Hülle-Nanopartikel, welche einen Kern mit mittleren Abmessungen im Bereich von 4 bis 10 nm aufweisen,
**dadurch gekennzeichnet, dass** sie die allgemeine Formel
(Me)ₘ(NR₁R₂R₃Rₐ⁺ X⁻)ₙ (1)
besitzen, wobei (Me) der aus einem Metall, ausgewählt aus Ag, Cu, Sn und Zn, gebildete Kern ist; (NR₁R₂R₃R₄⁺ X⁻) die Hülle ist, welche aus einer Vielzahl von Molekülen besteht, wobei X ausgewählt ist aus Cl, Br, und I; wobei NR₁R₂R₃R₄⁺ ausgewählt ist aus Benzalkoniumchlorid, Dimethyldidodecylammoniumchlorid, Dimethyldidecylammoniumchlorid, Benzyldodecyl-bis-(2-hydroxyethyl)ammoniumchlorid und Mischungen daraus.

2. Nanopartikel nach Anspruch 1, worin Me gleich Cu ist.

3. Nanoverbundmaterialien, umfassend eine Matrix, ausgewählt aus einer Polymermatrix und einer Gewebematrix, und eine Zusammensetzung der Nanopartikel gemäß einem der Ansprüche 1 oder 2.

4. Zusammensetzung umfassend zwei oder mehrere der Vielzahl von Nanopartikeln gemäß einem der Ansprüche 1 oder 2.

5. Zusammensetzung gemäß Anspruch 4, wobei Me für alle Nanopartikel gleich ist.

6. Verwendung der Nanopartikel gemäß einem der Ansprüche 1 oder 2 oder der Zusammensetzungen gemäß einem der Ansprüche 4 oder 5 als biostatische Verbindungen oder als Biozide und /oder als Desinfektionsmittel.

7. Desinfektionszusammensetzung, **dadurch gekennzeichnet, dass** sie Nanopartikel gemäß Anspruch 1 enthält.

8. Verfahren zur Herstellung von Kern/Hülle-Nanopartikeln, welche einen Kern mit mittleren Abmessungen im Bereich von 4 bis 10 nm aufweisen, welche die allgemeine Formel
(Me)ₘ(NR₁R₂R₃R₄⁺ X⁻)ₙ (1)
besitzen, wobei (Me) der aus einem Metall, ausgewählt aus Ag, Cu, Sn und Zn, gebildete Kern ist; (NR₁R₂R₃R₄⁺ X⁻) die Hülle ist, welche aus einer Vielzahl von Molekülen besteht, wobei X aus Cl, Br und I ausgewählt ist, und wobei NR₁R₂R₃R₄⁺ eine quartäre Ammoniumverbindung ist, wobei wenigstens ein R sich von den anderen unterscheidet und aus einer linearen Alkylkette mit einer Länge zwischen 8 und 18 Kohlenstoffatomen besteht, wobei die Partikel in einer mit drei Elektroden, einschließlich einer Arbeitselektrode und einer Referenzelektrode, ausgebildeten Zelle elektrochemisch hergestellt werden, **dadurch gekennzeichnet, dass** für die Herstellung eine wässrige Lösung eines Tensids und eines Metallsalzes verwendet wird, wobei die wässrige Lösung einen pH-Wert gleich oder größer als 9 aufweist.

9. Verfahren gemäß Anspruch 8, wobei (NR₁R₂R₃R₄⁺ X⁻) ausgewählt ist aus Benzalkoniumchlorid, Dimethyldidodecylammoniumchlorid, Dimethyldidecylammoniumchlorid, Benzyldodecyl-bis-(2-hydroxyethyl)ammoniumchlorid und Mischungen daraus.

## Revendications

1. Nanoparticules coeur/coque, présentant des dimensions moyennes du coeur situées dans la plage allant de 4 nm à 10 nm, **caractérisées en ce qu'**elles possèdent la formule générale
(Me)ₘ(NR₁R₂R₃R₄⁺X⁻) ₙ (1)
où (Me) est le coeur formé à partir d'un métal choisi parmi Ag, Cu, Sn et Zn ; (NR₁R₂R₃R₄⁺X⁻) est la coque formée d'une pluralité de molécules, où X est choisi parmi Cl, Br et I ; où NR₁R₂R₃R₄⁺ est choisi parmi le chlorure de benzalkonium, le chlorure de diméthyl-didodécyl-ammonium, le chlorure de diméthyl-didécyl-ammonium, le chlorure de benzyl-dodécyl-bis(2-hydroxyéthyl)ammonium et leurs mélanges.

2. Nanoparticules selon la revendication 1, dans lesquelles Me est Cu.

3. Matériaux nanocomposites, comprenant une matrice choisie parmi une matrice polymère et une matrice de tissu et une composition de nanoparticules selon la revendication 1 ou 2.

4. Composition comprenant deux ou plus de deux pluralités de nanoparticules selon la revendication 1 ou 2.

5. Composition selon la revendication 4, dans laquelle Me est identique pour toutes les nanoparticules.

6. Utilisation des nanoparticules selon la revendication 1 ou 2 ou des compositions selon la revendication 4 ou 5, comme composés biostatiques, ou biocides et/ou désinfectants.

7. Composition de désinfection, **caractérisée en ce qu'**elle contient des nanoparticules selon la revendication 1.

8. Procédé de préparation de nanoparticules coeur/coque présentant des dimensions moyennes du coeur situées dans la plage allant de 4 nm à 10 nm, ayant la formule générale
(Me)ₘ(NR₁R₂R₃R₄⁺X⁻) ₙ (1)
où (Me) est le coeur formé à partir d'un métal choisi parmi Ag, Cu, Sn et Zn ; (NR₁R₂R₃R₄⁺X⁻) est la coque formée d'une pluralité de molécules, où X est choisi parmi Cl, Br et I ; où NR₁R₂R₃R₄⁺ est un composé d'ammonium quaternaire dans lequel au moins un R est différent des autres et est une chaîne alkyle linéaire ayant une longueur située entre 8 et 18 atomes de carbone, dans lequel lesdites particules sont préparées par voie électrochimique dans une cellule dotée de trois électrodes comprenant une électrode de travail et une électrode de référence, **caractérisé en ce qu'**il est utilisé pour ladite préparation une solution aqueuse d'agent tensioactif et de sel métallique, ladite solution aqueuse ayant un pH supérieur ou égal à 9.

9. Procédé selon la revendication 8, dans lequel (NR₁R₂R₃R₄⁺X⁻) est choisi parmi le chlorure de benzalkonium, le chlorure de diméthyl-didodécyl-ammonium, le chlorure de diméthyl-didécyl-arrimonium, le chlorure de benzyl-dodécyl-bis(2-hydroxyéthyl)ammonium et leurs mélanges.
